(19) **Europäisches Patentamt / European Patent Office / Office européen des brevets**

(11) **EP 3 075 993 A1**

(12) **EUROPEAN PATENT APPLICATION**

(43) Date of publication:
05.10.2016 Bulletin 2016/40

(21) Application number: 16157946.1

(22) Date of filing: 29.02.2016

(51) Int Cl.:
F02D 41/10 $^{(2006.01)}$    F02D 11/10 $^{(2006.01)}$
B60W 40/13 $^{(2012.01)}$    F02D 41/02 $^{(2006.01)}$

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 31.03.2015 CN 201510148074

(71) Applicant: Xiaomi Inc.
Beijing 100085 (CN)

(72) Inventors:
• TANG, Mingyong
100085 BEIJING (CN)
• LIU, Huayijun
100085 BEIJING (CN)
• CHEN, Tao
100085 BEIJING (CN)

(74) Representative: Cougard, Jean-Marie et al
Cabinet Beau de Loménie
158, rue de l'Université
75340 Paris Cedex 07 (FR)

(54) **METHOD AND DEVICE FOR SETTING AN ACCELERATOR RESPONSE**

(57) The present disclosure relates to a method and a device for setting an accelerator response, which belongs to the field of vehicle. The method comprises: acquiring (201) current carrying capacity information of a vehicle; and setting (202) an accelerator response of the vehicle according to the current carrying capacity information. In the present disclosure, the current carrying capacity information of the vehicle is acquired, and the accelerator response of the vehicle is set according to the current carrying capacity information; in this way, the problem that the accelerator response will change when the carrying capacities of the vehicle are different is solved, and the following effect is achieved: the accelerator response of the vehicle is set according to the current carrying capacity and the accelerator response can stay the same or similar under different carrying capacities. Current carrying capacity is detected through a tyre pressure or tyre deformation, in order to detect vehicle weight.

201a
Acquire tire information of the vehicle, the tire information including a tire pressure and/or a tire deformation.

201b
Calculate current carrying capacity information of the vehicle according to the tire information

202
Set an accelerator response of the vehicle according to the current carrying capacity information

Fig. 2B

EP 3 075 993 A1

## Description

## TECHNICAL FIELD

The present disclosure relates to the field of vehicle and, more particularly, to a method and a device for setting an accelerator response.

## BACKGROUND

An accelerator in a vehicle is used for setting an acceleration of the vehicle.

Since the performance of the engine is invariable, under different carrying capacities of the vehicle, the accelerator response will change. When the vehicle is not loaded, the accelerator response is relatively quick; and when the carrying capacity of the vehicle is large, the accelerator response is relatively slow.

## SUMMARY

The embodiments of the present disclosure provide a method and a device for setting (or controlling) an accelerator response. The technical solutions are as follows.

According to a first aspect of embodiments of the present disclosure, there is provided a method for setting an accelerator response, comprising:

acquiring current carrying capacity information of a vehicle; and
setting an accelerator response of the vehicle according to the current carrying capacity information.

In one embodiment, the acquiring current carrying capacity information of a vehicle comprises:

acquiring tire information of the vehicle, the tire information comprising at least one of a tire pressure and a tire deformation; and
calculating the current carrying capacity information of the vehicle according to the tire information.

In one embodiment, the calculating the current carrying capacity information of the vehicle according to the tire information comprises:

if the tire information comprises the tire pressure, calculating the current carrying capacity information of the vehicle according to a current tire pressure and a no-load tire pressure.

In one embodiment, the calculating the current carrying capacity information of the vehicle according to the tire information comprises:

if the tire information comprises the tire deformation, calculating the current carrying capacity information of the vehicle according to a current tire deformation and a no-load tire deformation.

In one embodiment, the setting the accelerator response of the vehicle according to the carrying capacity information comprises:

acquiring a no-load vehicle weight information and a no-load accelerator response of the vehicle;
obtaining current total weight information of the vehicle according to the current carrying capacity information and the no-load vehicle weight information; and
setting a current accelerator response of the vehicle according to the no-load accelerator response and the current total weight information of the vehicle.

According to a second aspect of embodiments of the present disclosure, there is provided a device for setting an accelerator response, comprising:

an acquisition module configured to acquire current carrying capacity information of a vehicle; and
a setting module configured to set an accelerator response of the vehicle according to the current carrying capacity information.

In one embodiment, the acquisition module comprises:

a first acquisition submodule configured to acquire tire information of the vehicle, the tire information comprising at least one of a tire pressure and a tire deformation; and
a carrying capacity calculating submodule configured to calculate current carrying capacity of the vehicle according to the tire information.

In one embodiment, the carrying capacity calculating submodule is configured to calculate the current carrying capacity information of the vehicle according to a current tire pressure and a no-load tire pressure when the tire information comprises the tire pressure.

In one embodiment, the carrying capacity calculating submodule is configured to calculate the current carrying capacity information of the vehicle according to a current tire deformation and a no-load tire deformation when the tire information comprises the tire deformation.

In one embodiment, the setting module comprises:

a second acquisition submodule configured to acquire a no-load vehicle weight information and a no-load accelerator response of the vehicle;
a total weight calculating submodule configured to obtain current total weight information of the vehicle according to the current carrying capacity information and the no-load vehicle weight information; and

a response setting submodule configured to set a current accelerator response of the vehicle according to the no-load accelerator response and the current total weight information of the vehicle.

According to a third aspect of embodiments of the present disclosure, there is provided a device for setting an accelerator response, comprising:

a controller; and
a memory for storing instructions executable by the controller;

wherein the controller is configured to:

acquire current carrying capacity information of a vehicle; and
set an accelerator response of the vehicle according to the current carrying capacity information.

The present disclosure also provides a computer program, which when executing on a computer (or on a controller of a vehicle), performs the above method.

This program can use any programming language and take the form of source code, object code or a code intermediate between source code and object code, such as a partially compiled form, or any other desirable form.

The disclosure is also directed to a computer-readable information medium containing instructions of the computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

The information medium can also be an integrated circuit in which the program is incorporated, the circuit being adapted to execute the method in question or to be used in its execution.

The technical solutions provided by the embodiments of the present disclosure may comprise the following advantageous effects:

through acquiring the current carrying capacity information of the vehicle, and set the accelerator response of the vehicle according to the current carrying capacity information, the problem that the accelerator response will change when the carrying capacities of the vehicle are different is solved, and the following effect is achieved: the accelerator response of the vehicle is set according to the current carrying capacity and the accelerator response can stay the same or similar under different carrying capacities.

It is to be understood that both the foregoing general description and the following detailed description are exemplary and explanatory only and are not restrictive of the disclosure.

**BRIEF DESCRIPTION OF THE DRAWINGS**

The accompanying drawings, which are incorporated in and constitute a part of this specification, illustrate embodiments consistent with the disclosure and, together with the description, serve to explain the principles of the disclosure.

Fig. 1 illustrates a structural schematic diagram of one implementation circumstance involved by a method for setting an accelerator response, according to one example embodiment of the present disclosure.
Fig. 2A illustrates a flowchart of a method for setting an accelerator response, according to one example embodiment of the present disclosure.
Fig. 2B illustrates a flowchart of a method for setting an accelerator response, according to another example embodiment of the present disclosure.
Fig. 3 illustrates a flowchart of a method for setting an accelerator response, according to further another example embodiment of the present disclosure.
Fig. 4 illustrates a flowchart of a method for setting an accelerator response, according to still another example embodiment of the present disclosure.
Fig. 5 illustrates a block diagram of a device for setting an accelerator response, according to one example embodiment of the present disclosure.
Fig. 6 illustrates a block diagram of a device for setting an accelerator response, according to another example embodiment of the present disclosure.
Fig. 7 illustrates a block diagram of a device for setting an accelerator response, according to one example embodiment of the present disclosure.

Specific embodiments in this disclosure have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

**DETAILED DESCRIPTION**

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the disclosure. Instead, they are merely examples of devices and methods consistent with some aspects related to the disclosure as recited in the appended claims.

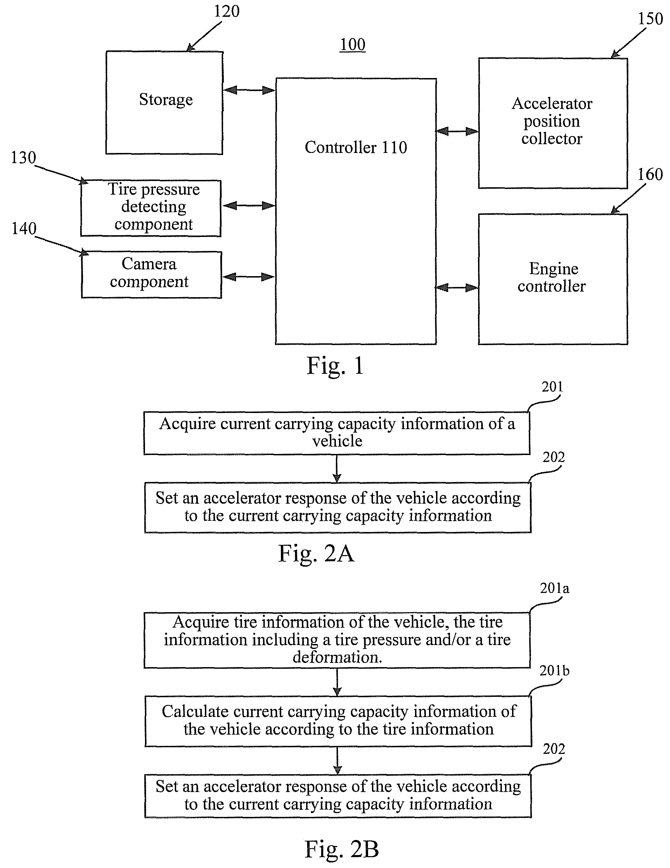

Fig. 1 illustrates a structural schematic diagram of one implementation of a method for setting (or controlling) an accelerator response, according to one example embodiment of the present disclosure. The present implementation is in a vehicle comprising an electronic accelerator control system 100. The vehicle may be an electric vehicle or automobile. The vehicle may be a vehicle having two tires, three tires, four tires, or more than four tires. The electronic accelerator control system 100 comprises a controller 110, a storage 120, a tire pressure detecting component 130, a camera component 140, an accelerator position collector 150 and an engine controller 160.

The controller 110 may be a MCU (Micro Control Unit). The controller 110 is electronically connected with the storage 120, the tire pressure detecting component 130, the camera component 140, the accelerator position collector 150 and the engine power controller 160 respectively.

The tire pressure detecting component 130 is used for collecting tire information of tire(s) of the vehicle, and sending the tire information to the controller 110.

The camera component 140 is used for collecting a tire picture of the vehicle, and sending the tire picture to the controller 110. The camera component may be provided at an upper portion of a lateral face of the tire of the vehicle.

The accelerator position collector 150 may be a pressure sensor or a displacement sensor, and is used for collecting a position state of the accelerator and sending the position state of the accelerator to the controller 110. The accelerator in a gas vehicle is usually a mechanical device, and the accelerator in an electronic vehicle is usually a sliding potentiometer.

The engine controller 160 may be an electronic air throttle in the gas vehicle, or an electronic speed regulator in the electronic vehicle. The engine power controller 160 is used for controlling an output torque of the engine of the vehicle.

It should be explained that the above electronic accelerator control system 100 may only comprise one of the tire pressure detecting component 130 and the camera component 140. For convenience of description, the electronic accelerator control system 100 comprising both the tire pressure detecting component 130 and the camera component 140 is illustrated in Fig. 1.

Fig. 2A illustrates a flowchart of a method for setting an accelerator response, according to one example embodiment of the present disclosure. In the present embodiment, the method for setting an accelerator response performed by the electronic accelerator control system 100 shown in Fig. 1 is illustrated. The method comprises the following steps.

In step 201, current carrying capacity information of a vehicle is acquired.

The current carrying capacity information means a weight of an object loaded by the vehicle.

In step 202, an accelerator response of the vehicle is set according to the current carrying capacity information.

The accelerator response means an acceleration provided to the vehicle, for instance by a torque outputted from the engine when a certain displacement of the accelerator is occurred.

In summary, in the method for setting an accelerator response provided by the present embodiment, the current carrying capacity information of the vehicle is acquired, and the accelerator response of the vehicle is set according to the current carrying capacity information; in this way, the problem that the accelerator response will change when the carrying capacities of the vehicle are different is solved, and the following effect is achieved: the accelerator response of the vehicle is set according to the current carrying capacity and the accelerator response can stay the same or similar under different carrying capacities. This allows more efficient and smoother control of the speed of a vehicle.

It should be noted, step 201 may be substituted by step 201a and step 201b, as shown in Fig. 2B.

In step 201a, tire information of the vehicle is acquired, the tire information comprising a tire pressure and/or a tire deformation.

In step 201b, current carrying capacity information of the vehicle is calculated according to the tire information.

Hereinafter, two different embodiments are adopted to give explanations respectively.

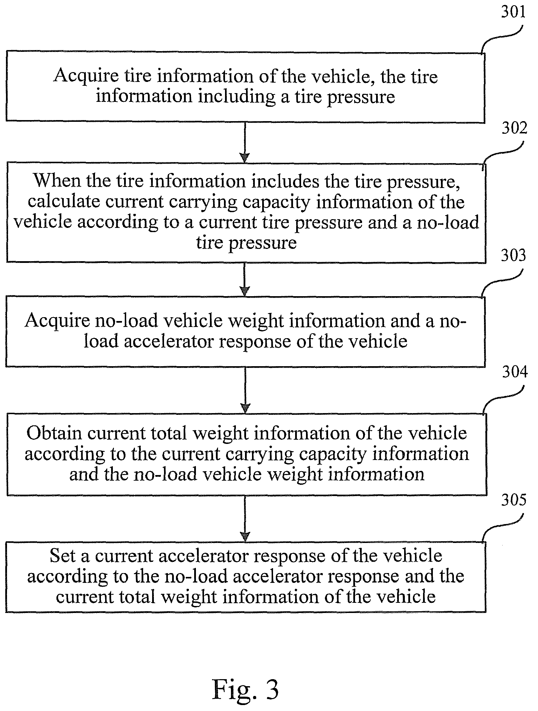

Fig. 3 illustrates a flowchart of a method for setting an accelerator response, according to another example embodiment of the present disclosure. In the present embodiment, the method for setting an accelerator response being performed by the electronic accelerator control system 100 shown in Fig. 1 is illustrated. The method comprises the following steps.

In step 301, tire information of the vehicle is acquired, the tire information comprising a tire pressure.

The controller acquires the tire information of the vehicle. In a particular example, the controller acquires a tire pressure of a tire of the vehicle via a tire pressure detecting component.

In step 302, when the tire information comprises the tire pressure, current carrying capacity information of the vehicle is calculated according to a current tire pressure and a no-load tire pressure.

When the vehicle is under different carrying capacities, the tire pressure of the tire will change.

When the tire information comprises the tire pressure, the controller calculates the current carrying capacity information of the vehicle according to the current tire pressure and the no-load tire pressure. The no-load tire pressure is a tire pressure of the vehicle in a no-load state.

As one implementation manner, a corresponding relationship of difference-carrying capacity between the tire pressure difference and the carrying capacity is stored in the storage in advance. The corresponding relationship of difference-carrying capacity may be a curve conforming to a positive relationship. That is, the larger the tire pressure difference is, the larger the carrying capacity is; and the smaller the tire pressure difference is, the smaller the carrying capacity is.

The controller obtains the tire pressure difference by subtracting the no-load tire pressure from the current tire pressure. Then, the current carrying capacity information is obtained based on the tire pressure difference and the corresponding relationship of difference-carrying capacity.

In step 303, no-load vehicle weight information and a no-load accelerator response of the vehicle are acquired.

The controller also needs to acquire the no-load vehicle weight information and the no-load accelerator response of the vehicle.

The no-load vehicle weight information may be pre-stored in the storage and may be read by the controller when necessary.

Alternatively, the controller acquires model information of the vehicle, and acquires the no-load vehicle weight information from network or from a corresponding relationship between the model and the no-load vehicle weight according to the model information.

The no-load accelerator response may be a corresponding relationship between a displacement of the accelerator during no-load and an output torque of the engine. The no-load accelerator response may also be pre-stored in the storage.

In step 304, current total weight information of the vehicle is obtained according to the current carrying capacity information and the no-load vehicle weight information.

The controller adds the current carrying capacity information to the no-load vehicle weight information to obtain the current total weight information of the vehicle.

In step 305, a current accelerator response of the vehicle is set according to the no-load accelerator response and the current total weight information of the vehicle.

The controller sets the current accelerator response of the vehicle according to the no-load accelerator response and the current total weight information of the vehicle, such that the acceleration of the vehicle corresponding to the no-load accelerator response and the acceleration of the vehicle corresponding to the current accelerator response are the same under the same displacement of the accelerator.

Assuming that the no-load vehicle weight information is $W1$, the current carrying capacity information is $W2$, then the current total weight information is $W1+W2$. When the displacement of the accelerator is $d$, and the output torque of the engine corresponding to the no-load accelerator response is $T1$, then the output torque of the engine corresponding to the current accelerator response $T2$ approximately satisfies the following equation.

$$T1/W1=T2/（W1+W2）$$

The controller may set the current accelerator responses within the whole displacement interval of the accelerator in the above way, or may set the current accelerator responses within a part of the displacement interval of the accelerator in the above way, which is not limited by the embodiments of the present disclosure.

In summary, in the method for setting an accelerator response according to the present embodiment, the current carrying capacity information is calculated by acquiring the tire pressure, and the accelerator response of the vehicle is set according to the current carrying capacity information; in this way, the problem that the accelerator response will change when the carrying capacities of the vehicle are different is solved, and the following effect is achieved: the accelerator response of the vehicle is set according to the current carrying capacity and the accelerator response can stay the same or similar under different carrying capacities. This allows more efficient and smoother control of the speed of a vehicle.

Moreover, in the method for setting an accelerator response according to the present embodiment, by making the acceleration of the vehicle corresponding to the no-load accelerator response and the acceleration of the vehicle corresponding to the current accelerator response to be the same under the same displacement of the accelerator, the vehicle can acquire the same acceleration under different carrying capacities, which may avoid the driver from feeling an accelerator lag when the carrying capacity is large.

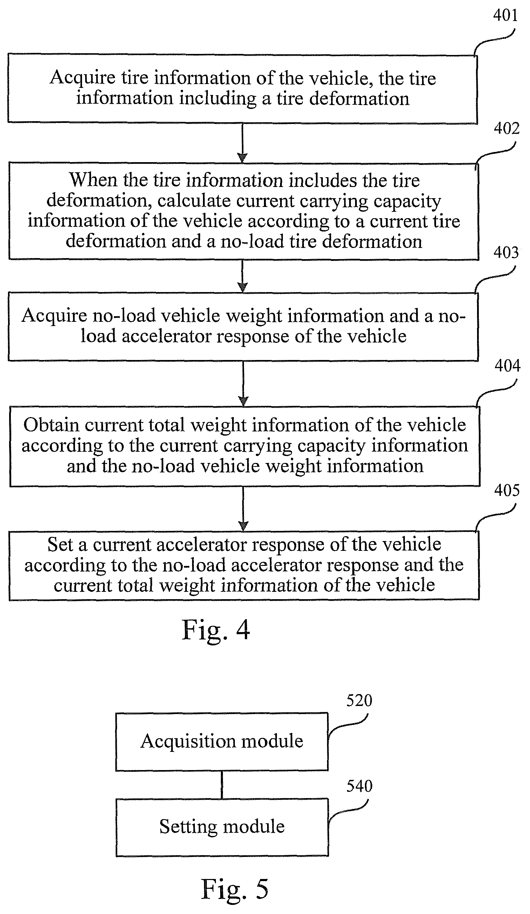

Fig. 4 illustrates a flowchart of a method for setting an accelerator response, according to further another example embodiment of the present disclosure. In the present embodiment, the method for setting an accelerator response being performed by the electronic accelerator control system 100 shown in Fig. 1 is illustrated. The method comprises the following steps.

In step 401, tire information of the vehicle is acquired, the tire information comprising a tire deformation.

The controller acquires the tire information of the vehicle. In a particular example, the controller acquires image information of a tire of the vehicle via a camera component, and extracts a tire deformation of the tire according to the image information.

In step 402, when the tire information comprises the tire deformation, current carrying capacity information of the vehicle is calculated according to a current tire deformation and a no-load tire deformation.

When the vehicle is under different carrying capacities, the deformation of the tire will change.

When the tire information comprises the tire deformation, the controller calculates the current carrying capacity information of the vehicle according to the current tire deformation and the no-load tire deformation. The no-load tire deformation is a tire deformation of the vehicle in a no-load state.

As one implementation manner, a corresponding relationship of difference-carrying capacity between the tire deformation difference and the carrying capacity is stored in the storage in advance. The corresponding relationship of difference-carrying capacity may be a curve conforming to a positive relationship. That is, the larger the tire deformation difference is, the larger the carrying capacity is; and the smaller the tire deformation difference is, the smaller the carrying capacity is.

The controller obtains the tire deformation difference by subtracting the no-load tire deformation from the current tire deformation. Then, the current carrying capacity information is obtained based on the tire deformation difference and the corresponding relationship of difference-carrying capacity.

In step 403, no-load vehicle weight information and a no-load accelerator response of the vehicle are acquired.

The controller also needs to acquire the no-load vehicle weight information and the no-load accelerator response of the vehicle.

The no-load vehicle weight information may be pre-stored in the storage and may be read by the controller when necessary.

Alternatively, the controller acquires model information of the vehicle, and acquires the no-load vehicle weight information from network or from a corresponding relationship between the model and the no-load vehicle weight according to the model information.

The no-load accelerator response may be a corresponding relationship between a displacement of the accelerator during no-load and an output torque of the engine. The no-load accelerator response may also be pre-stored in the storage.

In step 404, current total weight information of the vehicle is obtained according to the current carrying capacity information and the no-load vehicle weight information.

The controller adds the current carrying capacity information to the no-load vehicle weight information to obtain the current total weight information of the vehicle.

In step 405, a current accelerator response of the vehicle is set according to the no-load accelerator response and the current total weight information of the vehicle.

The controller sets the current accelerator response of the vehicle according to the no-load accelerator response and the current total weight information of the vehicle, such that the acceleration of the vehicle corresponding to the no-load accelerator response and the acceleration of the vehicle corresponding to the current accelerator response are the same under the same displacement of the accelerator.

Assuming that the no-load vehicle weight information is *W1*, the current carrying capacity information is *W2*, then the current total weight information is *W1+W2*. When the displacement of the accelerator is *d*, and the output torque of the engine corresponding to the no-load accelerator response is *T1*, then the output torque of the engine corresponding to the current accelerator response T2 approximately satisfies the following equation.

$$T1/W1 = T2/（W1+W2）$$

The controller may set the current accelerator responses within the whole displacement interval of the accelerator in the above way, or may set the current accelerator responses within a part of the displacement interval of the accelerator in the above way, which is not limited by the embodiments of the present disclosure.

In summary, in the method for setting an accelerator response according to the present embodiment, the current carrying capacity information is calculated by acquiring the tire deformation, and the accelerator response of the vehicle is set according to the current carrying capacity information; in this way, the problem that the accelerator response will change when the carrying capacities of the vehicle are different is solved, and the following effect is achieved: the accelerator response of the vehicle is set according to the current carrying capacity and the accelerator response can stay the same or similar under different carrying capacities.

Moreover, in the method for setting an accelerator response according to the present embodiment, by making the acceleration of the vehicle corresponding to the no-load accelerator response and the acceleration of the vehicle corresponding to the current accelerator response to be the same under the same displacement of the accelerator, the vehicle can acquire the same acceleration under different carrying capacities, which may avoid the driver from feeling an accelerator lag when the carrying capacity is large.

It should be explained, the controller may also calculate the current carrying capacity information according to both the tire pressure and the tire deformation. For instance, a first current carrying capacity information is calculated according to the tire pressure, a second current carrying capacity information is calculated according to the tire deformation, and the current carrying capacity information is obtained by calculating a weighted average of the first and second current carrying capacity information.

Embodiments of devices of the present disclosure are described hereinafter, which may be used for performing embodiments of methods of the present disclosure. For the details not described in the embodiments of devices of the present disclosure, the person skilled in the art should refer to the embodiments of methods of the present disclosure.

Fig. 5 illustrates a block diagram of a device for setting an accelerator response, according to one example embodiment of the present disclosure. The device for setting an accelerator response may be implemented to be a part or whole of the controller in the electronic accelerator control system by software, hardware or a combination of them. The device for setting an accelerator response may comprise an acquisition module 520, and a setting module 540.

The acquisition module 520 is configured to acquire current carrying capacity information of a vehicle.

The setting module 540 is configured to set an accelerator response of the vehicle according to the current carrying capacity information.

In summary, in the device for setting an accelerator response according to the present embodiment, the current carrying capacity information is calculated by acquiring the tire pressure of the vehicle, and the accelerator response of the vehicle is set according to the current carrying capacity information; in this way, the problem that the accelerator response will change when the carrying capacities of the vehicle are different is solved, and the following effect is achieved: the accelerator response of the vehicle is set according to the current carrying capacity and the accelerator response can stay the same or similar under different carrying capacities.

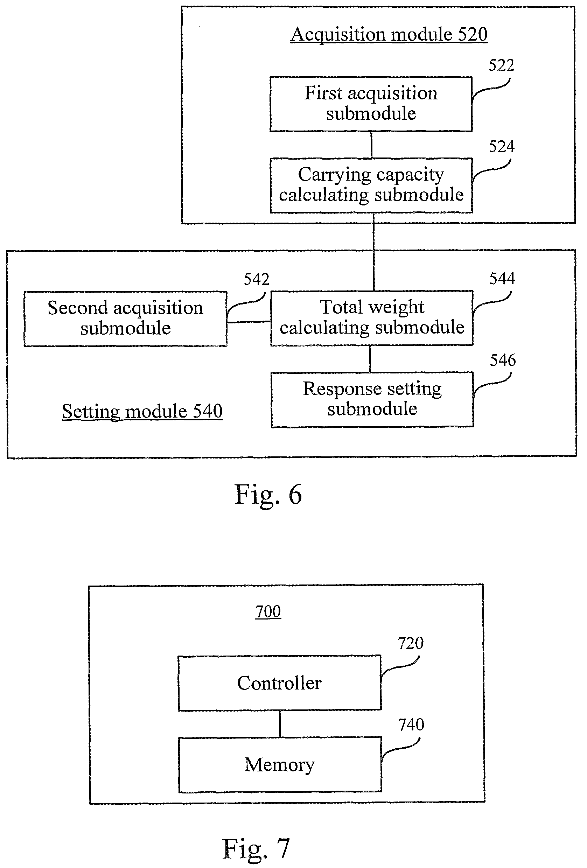

Fig. 6 illustrates a block diagram of a device for setting an accelerator response, according to another example embodiment of the present disclosure. The device for setting an accelerator response may be implemented to be a part or whole of the controller in the electronic accelerator control system by software, hardware or a combination of them. The device for setting an accelerator response may comprise an acquisition module 520, and a setting module 540.

The acquisition module 520 is configured to acquire current carrying capacity information of a vehicle.

The setting module 540 is configured to set an accelerator response of the vehicle according to the current carrying capacity information.

In a particular example, the acquisition module 520 comprises:

a first acquisition submodule 522 configured to acquire tire information of the vehicle, the tire information comprising at least one of a tire pressure and a tire deformation; and
a carrying capacity calculating submodule 524 configured to calculate current carrying capacity of the vehicle according to the tire information.

As a first possible implementation manner, the carrying capacity calculating submodule 524 is configured to calculate the current carrying capacity information of the vehicle according to a current tire pressure and a no-load tire pressure when the tire information comprises the tire pressure.

As a second possible implementation manner, the carrying capacity calculating submodule 524 is configured to calculate the current carrying capacity information of the vehicle according to a current tire deformation and a no-load tire deformation when the tire information comprises the tire deformation.

In a particular example, the setting module 540 comprises:

a second acquisition submodule 542 configured to acquire a no-load vehicle weight information and a no-load accelerator response of the vehicle;
a total weight calculating submodule 544 configured to obtain current total weight information of the vehicle according to the current carrying capacity information and the no-load vehicle weight information; and
a response setting submodule 546 configured to set a current accelerator response of the vehicle according to the no-load accelerator response and the current total weight information of the vehicle.

In summary, in the device for setting an accelerator response according to the present embodiment, the current carrying capacity information is calculated by acquiring the tire pressure, and the accelerator response of the vehicle is set according to the current carrying capacity information; in this way, the problem that the accelerator response will change when the carrying capacities of the vehicle are different is solved, and the following effect is achieved: the accelerator response of the vehicle is set according to the current carrying capacity and the accelerator response can stay the same or similar under different carrying capacities.

Moreover, in the device for setting an accelerator response according to the present embodiment, by making the acceleration of the vehicle corresponding to the no-load accelerator response and the acceleration of the vehicle corresponding to the current accelerator response to be the same under the same displacement of the accelerator, the vehicle can acquire the same acceleration under different carrying capacities, which may avoid the driver from feeling an accelerator lag when the carrying capacity is large.

With respect to the devices in the above embodiments, the specific manners for performing operations for individual modules therein have been described in detail in the embodiments regarding the methods, which will not be elaborated herein.

Fig. 7 illustrates a block diagram of a device for setting an accelerator response, according to one example embodiment of the present disclosure. The device for setting an accelerator response may comprise: a controller 720 and a memory 740 for storing instructions executable by the controller 720.

The controller 720 typically controls overall operations of the device 700. The controller 720 may comprise one or more processing cores to execute instructions to perform all or part of the steps in the above described methods. Moreover, the controller 720 may comprise one or more modules which facilitate the interaction between the controller 720 and other components. For instance, the controller 720 may comprise a tire pressure detecting module to facilitate the interaction between the tire pressure detecting component and the controller 720.

The memory 740 is configured to store various types of data to support the operation of the device 700. Examples of such data comprise instructions for any applications or methods operated on the device 700. The memory 740 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The controller 720 is configured to perform the method for setting the accelerator response illustrated by the above method embodiments.

In example embodiments, there is also provided a non-transitory computer readable storage medium comprising instructions, such as comprised in the memory 740, executable by the controller 720 in the device 700, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium is provided. When the instructions in the storage medium are performed by the controller of the device 700, the device 700 can perform the method of the accelerator response illustrated by the above method embodiments.

Other embodiments of the disclosure will be apparent to those skilled in the art from consideration of the specification and practice of the disclosure disclosed here. This application is intended to cover any variations, uses, or adaptations of the disclosure following the general principles thereof and comprising such departures from the present disclosure as come within known or customary practice in the art. It is intended that the specification and examples be considered as exemplary only, with the scope of the disclosure being indicated by the following claims.

**Claims**

1. A method of setting an accelerator response, **characterized in that**, the method comprises:

   acquiring (201) current carrying capacity information of a vehicle; and
setting (202) an accelerator response of the vehicle according to the current carrying capacity information.

2. The method according to claim 1, **characterized in that**, the acquiring (201) current carrying capacity information of the vehicle comprises:

   acquiring (201a) tire information of the vehicle, the tire information comprising at least one of a tire pressure and a tire deformation; and
   calculating (201b) the current carrying capacity information of the vehicle according to the tire information.

3. The method according to claim 2, **characterized in that**, the calculating (201b) the current carrying capacity information of the vehicle according to the tire information comprises:

   if the tire information comprises the tire pressure, calculating (302) the current carrying capacity information of the vehicle according to a current tire pressure and a no-load tire pressure.

4. The method according to claim 2 or 3, **characterized in that**, the calculating (201b) the current carrying capacity information of the vehicle according to the tire information comprises:

   if the tire information comprises the tire deformation, calculating (402) the current carrying capacity information of the vehicle according to a current tire deformation and a no-load tire deformation.

5. The method according to any one of claims 1-4, **characterized in that**, the setting (202) the accelerator response of the vehicle according to the carrying capacity information comprises:

   acquiring (303, 403) a no-load vehicle weight information and a no-load accelerator response of the vehicle;
   obtaining (304, 404) current total weight information of the vehicle according to the current carrying capacity information and the no-load vehicle weight information; and
   setting (305, 405) a current accelerator response of the vehicle according to the no-load accelerator response and the current total weight information of the vehicle.

6. A device for setting an accelerator response, **characterized in that**, the device comprises:

   an acquisition module (520) configured to acquire current carrying capacity information of a vehicle; and
a setting module (540) configured to set an accelerator response of the vehicle according to the current carrying capacity information.

7. The device according to claim 6, **characterized in that**, the acquisition module (520) comprises:

a first acquisition submodule (522) configured to acquire tire information of the vehicle, the tire information comprising at least one of a tire pressure and a tire deformation; and
a carrying capacity calculating submodule (524) configured to calculate current carrying capacity of the vehicle according to the tire information.

8. The device according to claim 7, **characterized in that**,
the carrying capacity calculating submodule (524) is configured to calculate the current carrying capacity information of the vehicle according to a current tire pressure and a no-load tire pressure when the tire information comprises the tire pressure.

9. The device according to claim 7 or 8, **characterized in that**,
the carrying capacity calculating submodule (524) is configured to calculate the current carrying capacity information of the vehicle according to a current tire deformation and a no-load tire deformation when the tire information comprises the tire deformation.

10. The device according to any one of claims 6-9, **characterized in that**, the setting module (540) comprises:

a second acquisition submodule (542) configured to acquire a no-load vehicle weight information and a no-load accelerator response of the vehicle;
a total weight calculating submodule (544) configured to obtain current total weight information of the vehicle according to the current carrying capacity information and the no-load vehicle weight information; and
a response setting submodule (546) configured to set a current accelerator response of the vehicle according to the no-load accelerator response and the current total weight information of the vehicle.

11. A computer program including instructions for executing the steps of a method according to any one of claims 1 to 5 when said program is executed by a computer.

12. A recording medium readable by a computer and having recorded thereon a computer program including instructions for executing the steps of a method according to any one of claims 1 to 5.

120

Storage

130

Tire pressure detecting component

140

Camera component

100

Controller 110

150

Accelerator position collector

160

Engine controller

Fig. 1

201

Acquire current carrying capacity information of a vehicle

202

Set an accelerator response of the vehicle according to the current carrying capacity information

Fig. 2A

201a

Acquire tire information of the vehicle, the tire information including a tire pressure and/or a tire deformation.

201b

Calculate current carrying capacity information of the vehicle according to the tire information

202

Set an accelerator response of the vehicle according to the current carrying capacity information

Fig. 2B

301

Acquire tire information of the vehicle, the tire information including a tire pressure

302

When the tire information includes the tire pressure, calculate current carrying capacity information of the vehicle according to a current tire pressure and a no-load tire pressure

303

Acquire no-load vehicle weight information and a no-load accelerator response of the vehicle

304

Obtain current total weight information of the vehicle according to the current carrying capacity information and the no-load vehicle weight information

305

Set a current accelerator response of the vehicle according to the no-load accelerator response and the current total weight information of the vehicle

Fig. 3

401

Acquire tire information of the vehicle, the tire information including a tire deformation

402

When the tire information includes the tire deformation, calculate current carrying capacity information of the vehicle according to a current tire deformation and a no-load tire deformation

403

Acquire no-load vehicle weight information and a no-load accelerator response of the vehicle

404

Obtain current total weight information of the vehicle according to the current carrying capacity information and the no-load vehicle weight information

405

Set a current accelerator response of the vehicle according to the no-load accelerator response and the current total weight information of the vehicle

Fig. 4

520

Acquisition module

540

Setting module

Fig. 5

## Acquisition module 520

First acquisition submodule — 522

Carrying capacity calculating submodule — 524

Second acquisition submodule — 542

Total weight calculating submodule — 544

Response setting submodule — 546

Setting module 540

## Fig. 6

700

Controller — 720

Memory — 740

## Fig. 7

Europäisches
Patentamt

European
Patent Office

Office européen
des brevets

# EUROPEAN SEARCH REPORT

Application Number

EP 16 15 7946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2004 038747 A1 (DAIMLER CHRYSLER AG [DE]) 23 February 2006 (2006-02-23) | 1,5,6, 10-12 | INV. F02D41/10 |
| Y | * paragraph [0003] - paragraph [0005]; claims 1,4,5,8 * <br> * paragraph [0013] - paragraph [0015] * <br> * paragraph [0027] * | 2,3,7,8 | F02D11/10 B60W40/13 F02D41/02 |
| Y | EP 2 088 304 A2 (PEUGEOT CITROEN AUTOMOBILES SA [FR]) 12 August 2009 (2009-08-12) * paragraph [0026]; claims 1,4,6 * * paragraph [0034] - paragraph [0037] * | 2,3,7,8 | |
| Y | DE 37 18 471 A1 (BREIT CHRISTOPH [DE]) 22 December 1988 (1988-12-22) * column 2, line 34 - line 37; claim 4 * * column 3, line 62 - line 67 * * column 4, line 11 - line 19; figure 6 * | 2,3,7,8 | |

TECHNICAL FIELDS
SEARCHED      (IPC)

F02D
B60W

The present search report has been drawn up for all claims

| Place of search | Date of completion of the search | Examiner |
|---|---|---|
| The Hague | 19 August 2016 | Rocabruna Vilardell |

EPO FORM 1503 03.82 (P04C01)

## ANNEX TO THE EUROPEAN SEARCH REPORT
## ON EUROPEAN PATENT APPLICATION NO.

EP 16 15 7946

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2016

| Patent document cited in search report | | Publication date | Patent family member(s) | | Publication date |
|---|---|---|---|---|---|
| DE 102004038747 | A1 | 23-02-2006 | NONE | | |
| EP 2088304 | A2 | 12-08-2009 | EP | 2088304 A2 | 12-08-2009 |
| | | | FR | 2927370 A1 | 14-08-2009 |
| DE 3718471 | A1 | 22-12-1988 | AT | 68899 T | 15-11-1991 |
| | | | AU | 1791388 A | 04-01-1989 |
| | | | DE | 3718471 A1 | 22-12-1988 |
| | | | EP | 0373170 A1 | 20-06-1990 |
| | | | JP | H02503662 A | 01-11-1990 |
| | | | US | 5081443 A | 14-01-1992 |
| | | | WO | 8809976 A1 | 15-12-1988 |

EPO FORM P0459

For more details about this annex : see Official Journal of the European Patent Office, No. 12/82